# EUROPEAN PATENT APPLICATION

(11) **EP 2 924 393 A1**
(43) Date of publication of application: **30.09.2015**
(21) Application number: 14161914.8
(22) Date of filing: 27.03.2014
(51) Int. Cl.: G01C 23/00, G08G 5/00

(54) **Head-up display**

(71) Applicant: Stichting Hogeschool van Amsterdam, 1012 WZ Amsterdam (NL)
(72) Inventor: VAN GENT, Ronald Nikola Huib Willem, 3768GN Soest (NL)
(74) Representative: HGF Limited

(57) **Abstract**

There is disclosed a head-up display system and method. In particular, there is disclosed a head-up display system and method for an aircraft including a display, a camera and a processor. The head-up display system is able to calculate a first flight path marker calculated from an inertial measurement unit and a second flight path marker from successive images captured by the camera, and provides a portable head up display with redundancy alarm.

## Description

There is disclosed a head-up display system and method. In particular, there is disclosed a portable head-up display system and method for an aircraft including a display, a camera and a processor.

### BACKGROUND

A head-up display (HUD) is a transparent display that provides data in the normal viewing direction of the pilot. The pilot is not required to look down to see instruments as the display shows the information on the transparent screen. Typically, HUDs are found in military aircraft, although more recently they have been introduced in large commercial aircraft.

The prior art shows that the use of a head-up display (HUD) improves flight safety because pilots are provided with flight information, such as a flight path marker (FPM), that they would otherwise have to determine for themselves. As such, a pilot's workload is reduced and he or she is able to respond to abnormal situations more rapidly. The main advantage of a HUD is the provision of a FPM which enables a pilot to appreciate where the aircraft is flying towards when no further steering input is given. The FPM is especially useful during difficult landings where crosswinds or poor visibility make it particularly difficult to determine where the aircraft is flying towards, and often different to where it is physically pointing (i.e. the direction of its longitudinal axis).

Conventional instruments are located below the cockpit window and therefore the pilot must look down, away from the cockpit window, in order to read the data presented by the numerous instruments and displays in the cockpit. A conventional head up display (HUD) solves this by projecting numerous types of information onto a transparent surface in the pilot's field of view through the cockpit window. Because the information is projected on a transparent surface, it possible for the pilot to look through the HUD while observing the required information and while still looking directly out of the cockpit window. A conventional HUD includes a projector unit, a combiner and a computer. The projector projects the information onto the combiner which is typically a glass plate. The computer receives information from the aircraft instrumentation and using the data generates imagery and symbology to send to the projector for projection onto the combiner.

One of the basic features a HUD provides is the current attitude of the aircraft relative to the earth's horizon. It shows how much the aircraft is banking and whether the aircraft is climbing or descending. It can also be used to check if the aircraft is no longer banking and/or climbing or descending, making it possible to keep the aircraft level. Other basic information that can be displayed on a HUD is information such as the airspeed, altitude and heading. A HUD can gain this information for example from a connection with the conventional instruments or from an Inertial Reference System (IRS), which is a system that measures the force vectors of the aircraft to determine information such as movement around the aircraft's orthogonal axes.

Besides basic information that is already available to pilots when they fly with traditional instruments, the HUD is able to display new features that assist the pilot, including the FPM, typically displayed as a circle with two or three lines. The FPM uses the force vectors of the aircraft to determine where the aircraft would end up when no further input to the flight controls would be made. By keeping the FPM pointed at a certain point the pilot knows that the aircraft will end up at that particular point, subject to any changes the pilot decides upon, or changing external environmental conditions. This makes navigating the aircraft far easier and safer. The FPM is especially useful during landings or when flying through mountainous terrain. For example during landing, the only thing the pilot needs to do is to keep aiming the FPM on the threshold of the runway. When doing so, the aircraft will end up right at the threshold of the runway. If the aircraft is flying at a low altitude in mountainous terrain, if the FPM is aiming at a mountain the pilot will instantaneously know that the aircraft is heading towards that mountain and the pilot can take corrective action to avoid a collision. The force-vectors of the aircraft from the IRS are used to determine where the aircraft is going in order to display the FPM. Because a FPM is determined from the force vectors it is also helpful in complex flight situations such as crosswind landings because it may not be immediately apparent how much a crosswind is affecting the flight path.

Besides the possibility to display a FPM on the HUD, there are many more features that can be displayed. These include information about the airspace, accelerations, decelerations, airports, weather, navigation, autopilot systems, and any particular limitations of the aircraft.

A HUD is a relatively new and uncommon technology and is not normally used in aircraft in the CS-23 EASA certification category (i.e. normal, utility, aerobatic and commuter aeroplanes) due to the prohibitive cost of HUDs. Furthermore, new products for aircraft are subject to complex and costly certification processes which cause difficulty for new products to make it to the marketplace due to lack of certification from regulators.

Despite this, the use of a HUD makes flying easier and safer by projecting information in the line of view of the pilot. While using a HUD the pilot is able to look forward (out of the window) and at the same time receive information such as airspeed, altitude and attitude. The improvement in flight safety has been demonstrated for larger aircraft by the Flight Safety Foundation. Smaller aircraft such as the CS-23 category aircraft would likely benefit from the use of a HUD, and the HUD would provide many safety advantages for CS-23 aircraft.

There is a need for a head-up display system and method for an aircraft that mitigates some of the above mentioned problems.

### BRIEF SUMMARY OF THE DISCLOSURE

In accordance with a first aspect there is provided a portable head up display system for an aircraft comprising:
a display, for disposition in a cockpit of the aircraft in a forward line of sight of a pilot when seated in a pilot's seat in the cockpit;
a camera, for disposition on the aircraft to provide a field of view that at least partially intersects the line of sight of the pilot when seated in the pilot's seat in the cockpit; and
a processor;
wherein:
   the display is configurable to display an image captured by the camera of the external environment of the aircraft that the pilot would observe in the direction of the display in the absence of the display and any aircraft objects;
   the processor is adapted to receive avionic information from instrumentation, either of the aircraft or of the system;
   the processor is adapted to calculate, on the basis of the instrumentation, a first flight path marker (FPM_{I});
   the processor is adapted to calculate, on the basis of flow of pixels in successive images captured by the camera, a second flight path marker (FPM_{O}), to correlate with the FPM_{I}; and
   the processor is adapted to overlay, on the image displayed by the display, one of said first and second flight path markers, or a combination thereof and provide an alarm if said correlation indicates a lack of correspondence between FPM_{I} and FPM_{O} greater than a predetermined threshold.

The advantage of the portable head-up display (PHUD) system is that the system provides means for calculating a flight path marker from two different measurement systems. The first flight path marker (FPM_{I}) is calculated from avionic information from the instrumentation, either of the aircraft or of the system and the second flight path marker (FPM_{O}) is calculated using information derived from the flow of pixels in successive images captured by the camera. In this manner, the head-up display system provides redundancy of the flight path marker because the displayed flight path marker is calculated using independent components that operate in parallel. If the correlation between FPM_{I} and FPM_{O} indicate a lack of correspondence greater than a predetermined threshold, an alarm is triggered informing the pilot that there is a problem with either one of the calculations and as such the flight path marker should not be used.

Optionally, a focus of expansion (FOE) of the flow of pixels over a time period (tᵢ) may be determined by the processor, the FPM_{O} being determined on the basis of the position of the FOE.

Optionally, the FPM_{O} may be determined from an adjustment of the position of the FOE based on pitch, roll and/or yaw motion of the aircraft, said motion of the aircraft being determined by computation of at least one reference point of said flow of pixels over said time period.

Optionally, the processor may be adapted to compute a centre of motion (COM) of said flow of pixels over said time period.

Optionally, the COM may be determined based on goniometric determinations from pixel flow over said period.

Optionally, the processor may be adapted to overlay, on the image displayed by the display, at least one of: a bank angle indicator; a slip angle indicator, the slip angle being derived by the processor using the instrumentation; a maximum angle of attack (MAOA) indicator an airspeed indicator; an altitude indicator; a horizon line indicator; a heading indicator; or an acceleration indicator.

Optionally, the instrumentation may include an inertial measurement unit (IMU).

Optionally, the instrumentation may include a global positioning system (GPS), a microelectromechanical system gyroscope (MEMS gyro) and/or an accelerometer.

Optionally, the instrumentation may be provided in a tamper-proof housing, and optionally, the tamper-proof housing is provided with an integral power supply.

In accordance with a second aspect there is provided a method for using a portable head-up display in an aircraft comprising:
displaying real-time images captured by a camera of the external environment of the aircraft that the pilot would observe in the direction of the display in the absence of the display and any aircraft objects on a display disposed in a cockpit of the aircraft in a forward line of sight of a pilot when seated in a pilot's seat in the cockpit, the camera being disposed on the aircraft to provide a field of view that at least partially intersects the line of sight of the pilot when seated in the pilot's seat in a cockpit;
receiving avionic information from instrumentation, either of the aircraft or of the system;
calculating, on the basis of the instrumentation, a first flight path marker (FPM_{I});
calculating, on the basis of flow of pixels in successive images captured by the camera a field of expansion (FOE) and determining from the FOE a second flight path marker (FPM_{O}), to correlate with the FPM_{I}; and
overlaying, on the image displayed by the display, one of said first and second flight path markers, or a combination thereof; and
providing an alarm if said correlation indicates a lack of correspondence between FPM_{I} and FPM_{O} greater than a predetermined threshold.

Optionally, the method may further comprise:
selecting using predetermined criteria at least one reference pixel in the image; and
monitoring the flow of said at least one reference pixel between successive images over a time period (ti);
computing an adjustment factor to adjust the FOE for the effects of pitch, roll and/or yaw motion of the aircraft; and
applying the adjustment factor to correct the FPMO.

Optionally, the method may further comprise identifying on the basis of flow of pixels in successive images captured by the camera the centre of motion (COM) of the aircraft using goniometric determinations.

Optionally, the method may further comprise:
calculating a dimension of rotation of the aircraft by knowing the angle of view of the camera;
overlaying a raster on successive images from the camera; and
using a known distance from the aircraft to the ground, calculating an effective ground distance the aircraft has travelled between two successive images.

Optionally, the method may further comprise:
identifying at least two ground coordinates from successive images from the camera, the ground coordinates representing a time sequenced ground position of the aircraft;
calculating the angle between the at least two ground coordinates, the angle representing an angle of rotation of the aircraft and the centre of motion (COM) of the aircraft; and
using the COM of the aircraft to normalise the flight path marker FPMO calculated on the basis of flow of pixels in successive images captured by the camera.

### BRIEF DESCRIPTION OF THE DRAWINGS

Embodiments of the invention are further described hereinafter with reference to the accompanying drawings, in which:
Figure 1 is a portable head up display system;
Figure 2 shows the expected optical flow pattern, for forward motion of an aircraft, of pixels in successive images captured by cameras pointing in different directions;
Figures 3(a) and 3(b) show the expected optical flow patterns for roll right translation and roll left translation respectively;
Figure 4 shows the optical flow field and field of expansion cross points for forward motion of the aircraft;
Figure 5 shows the optical flow field and field of expansion cross points for movement of the aircraft corresponding to a turn to the left;
Figure 6 shows the optical flow field and field of expansion cross points for movement of the aircraft corresponding to a yaw to the right;
Figure 7(a) and 7(b) show the successive images captured during roll of the aircraft, Figure 7(a) shows the unadjusted flow lines of successive pixels, and 7(b) shows the adjusted flow lines.

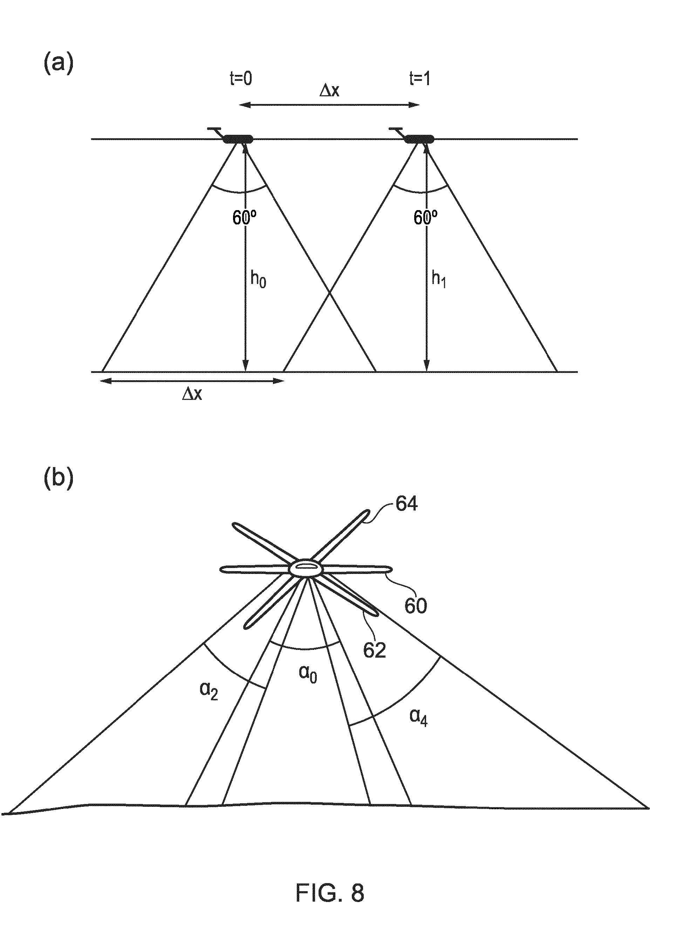

Figure 8(a) shows the arrangement of an aircraft at t=0 and t=i, and the goniometric relationships used to quantify the angle of rotation and translation of the aircraft, and Figure 8(b) shows the affect rolling the aircraft has on the image captured by the camera, the camera having a fixed angle of view.

### DETAILED DESCRIPTION

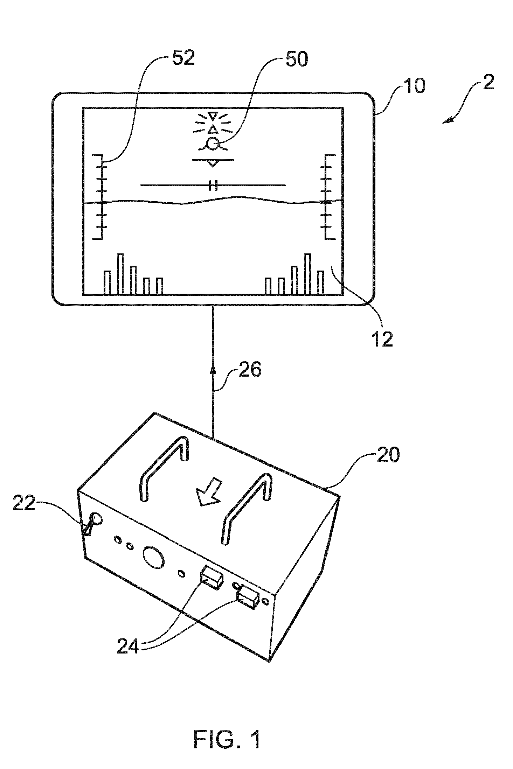

Figure 1 shows a display 10 such as a tablet computer of a portable head up display system 2.

The display is positioned in a cockpit of an aircraft in a forward line of sight of a pilot when seated in a pilot's seat in the cockpit. The display is held in position using a frame and brackets (not shown) connected to the cockpit. Alternative fixing means such as a hook and loop fasteners, or other fixing means known in the art may be used to fix the display in the cockpit.

A camera is positioned on the aircraft to provide a field of view that at least partially intersects the line of sight of the pilot when seated in the pilot's seat in the cockpit. The camera is attached towards the front of the aircraft. The available field of view of the camera will be dependent on the type of camera used. Typically, a high definition camera is used to capture successive images.

Multiple cameras may be used to increase the field of view of the system. Cameras may be positioned on the underside of the aircraft, as well as on the port and starboard sides of the aircraft. A camera may also be positioned at the rear of the aircraft. The exact location of the camera, or cameras, will depend upon the type of aircraft the head-up display system is adapted for.

A ground view camera may be provided for disposition on the aircraft to provide a field of view of the ground.

A rear view camera may be provided for disposition on the aircraft to provide a field of view of the view from the rear of the aircraft.

If multiple cameras are necessary to achieve a particularly desired field of view, software is used to stitch images from differently located cameras together.

The processor is preferably housed in a secure and robust housing 20 having controls 22 for operating the processor. The processor connects to either the aircraft's instrumentation or it connects to standalone instrumentation within the housing. Typically, the housing is fed pressure related data via connection ports 24 from the aircraft's own instrumentation relating to ground speed and altitude. The processor connects to the tablet via wired or wireless connections 26.

The blue box (or housing 20) has access to or determines air data, navigation data, engine data, sonar altitude, outside air temperature (OAT), audio data and video data from the camera. Suitable connections 24 are provided to access such data from aircraft systems (as well as from the camera (not shown)). Alternatively, the blue box 20 may include suitable instrumentation to determine such data for itself. In that event, said connections may include connections for relevant sensors, such as external air pressure, from which to make the requisite determinations. The processor uses the information from the instrumentation to push the processed data to the display for display. Typically data pushed to the display for display on the display includes successive images (i.e. video images) from the camera, altitude, pitch ladder, the horizon line, maximum angle of attack (MAOA), bank angle and slip.

The processor calculates a flight path marker for display on the display. The processor calculates, on the basis of the avionic information from the instrumentation, a first flight path marker (FPM_{I}) based on avionic information from inertial measurements. The FPM_{I} is an instantaneous calculation, irrespective of historic or future movements. It is updated as frequently as desired based on the force vectors currently applying to the aircraft at any instant.

Most of the information displayed on the HUD will be information that is also displayed on the aircraft's existing instruments, and is therefore capable of being cross-checked against those instruments. In any event, this information is (potentially) derived from existing aircraft instrumentation that will include robustness and/or redundancy so that significant reliance can be placed on that information. However, the same cannot be said for the FPM which is not calculated for an aircraft that has no HUD, since the FPM can only be displayed on a HUD.

An FPM is an extremely useful piece of information for a pilot, on which significant reliance may be placed when it is provided on a HUD. Research has indicated that multiple aircraft accidents where pilot error accounted at least in part for the cause of the accident could potentially have been avoided if the aircraft had had a HUD with an FPM. Because of this usefulness and potential reliance placed upon it by pilot's, some assurance or checking needs to be provided that the FPM displayed is correct.

Accordingly, the processor also receives successive images captured by the camera, and calculates, on the basis of flow of pixels in successive images a second flight path marker (FPM_{O}), to correlate with the FPM_{I}.

In a CS-23 category aircraft, the pilot is always able to view a panel showing a number of gauges displaying data from the inertial measurement system, and from which FPM_{I} can be determined with appropriate calculations. However, the panel is usually positioned away from the cockpit window forcing the pilot to break his or her view and look away from the cockpit window in order to see the panel and access the data.

The second flight path marker (FPM_{O}) is calculated based on a principle of optical flow. Optical flow (OF) is the movement or flow of pixels across a series of successive images captured by a moving camera. By analysing the OF, it is possible to determine the focus of expansion (FOE) of an image. The FOE is the point from which all pixel vectors are radially expanding. Therefore the FOE corresponds to the point where the camera (or aircraft) is traveling towards. The two dimensional movement or optical flow of pixels in successive images shows the displacement of each pixel in a video image, between two consecutive video images and therefore the displacement at t=0 and t=i. That is, the FOE is dependent on past movement of the camera over a discrete period of time.

Therefore by analysing the images, the movement of the aircraft with respect to time is determined and the second flight path marker (FPM_{O}) is calculated. The calculation of the FPM_{O} is completely independent of the calculation of the first flight path marker (FPM_{I}) and therefore provides redundancy for this aspect of the head up display system.

Figure 1 shows an example of the display (such as a tablet computer display) with data overlaid on the display including a portion of the field of view 12 of the camera, a flight path marker 50 and other data 52.

As mentioned above, the second flight path marker (FPM_{O}) is calculated based on a principle of optical flow. OF is typically processed by tracking points with a constant brightness. This is based on the assumption that the brightness of a point in the scene stays constant over a far greater timescale than the timescale between successive images. Therefore, the optical flow only relates to movement of the aircraft.

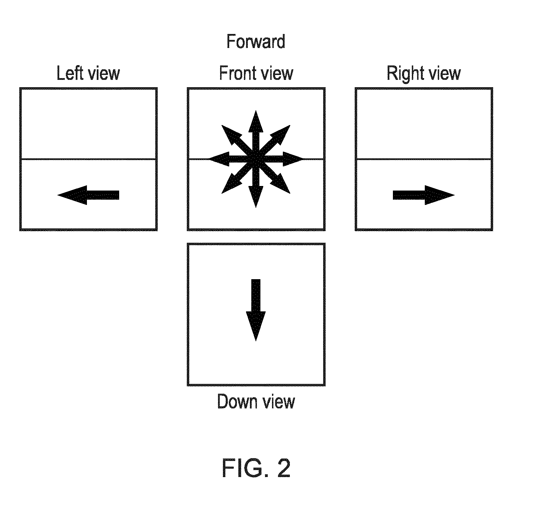

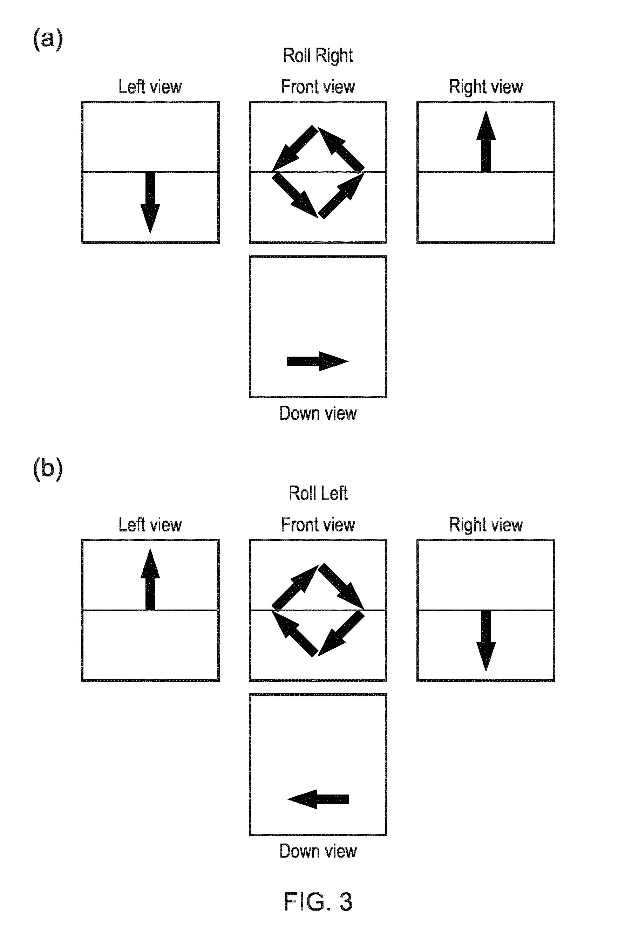

Figures 2, 3(a) and 3(b) show the expected optical flow patterns for different translations and rotations of the aircraft. Figure 2 corresponds to the expected flow field of pixels when the aircraft (and camera) is moving forward. Figure 2 shows either portions of an image from a wide-angle camera, one that not only has a field of view in a forward direction, but also left, right and down. Alternatively, Figure 2 is a composition of images from four different camera units, pointing forward, left, right and down. In either case, the movement of pixels is the same, depending on the direction of a particular pixel with respect to the camera's movement. Figures 3(a) and 3(b) show the expected flow field of pixels when the aircraft is rolling to the right and rolling to the left respectively. By mapping the expected OF field for a particular aircraft movement, it is possible to identify and calculate the movement of the aircraft by analysing the recorded OF fields. There are six expected translations (up, down; left, right; forward, backward) and six expected rotations of the aircraft relative to the aircraft's x, y, and z axis (clockwise or anti-clockwise around each axis).

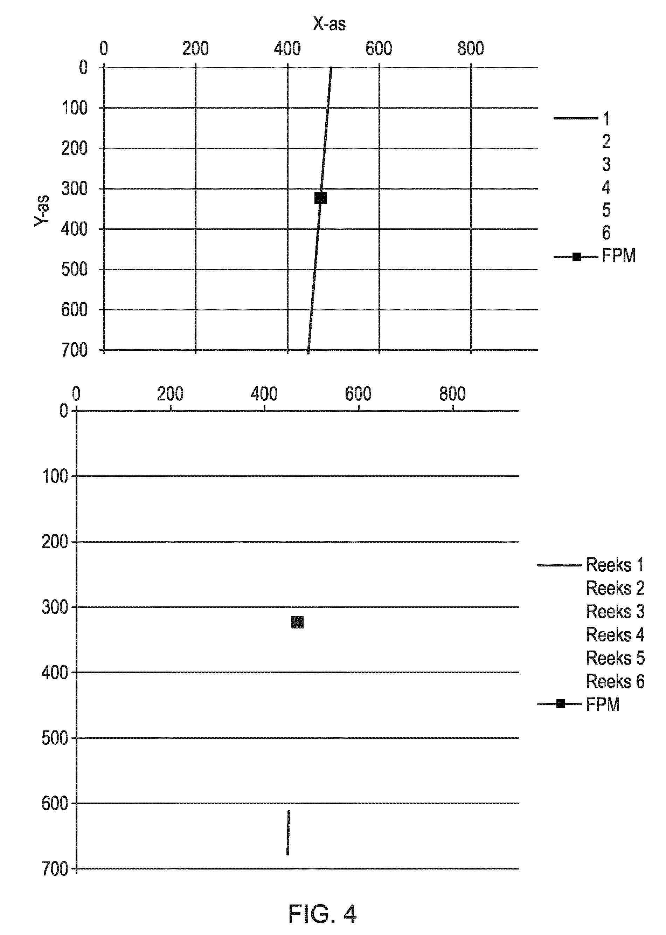

The use of the FOE to identify the FPM_{O} was tested using a flight-simulator program. Figure 4 shows the pixel flow field for 6 tracked pixels, the pixels having been tracked between successive images captured by the camera. The FPM shown on Figure 4 was obtained directly from the flight-simulator program. A number of pixels were tracked for a plurality of time steps and the linear trend lines between the pixel coordinates are shown at the top of the figure. From the linear trend lines, the FOE is extrapolated, the FOE corresponding with the FPM_{O}. The determination of the FPM_{O} is particularly accurate in the forward direction as shown in Figure 4. However, this is not the case for all movements of the aircraft.

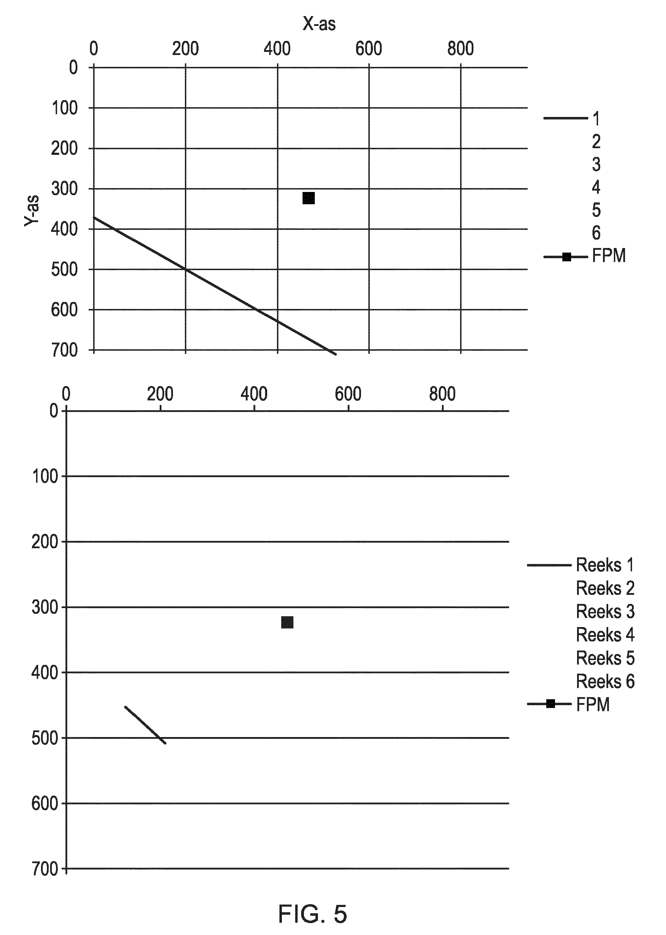

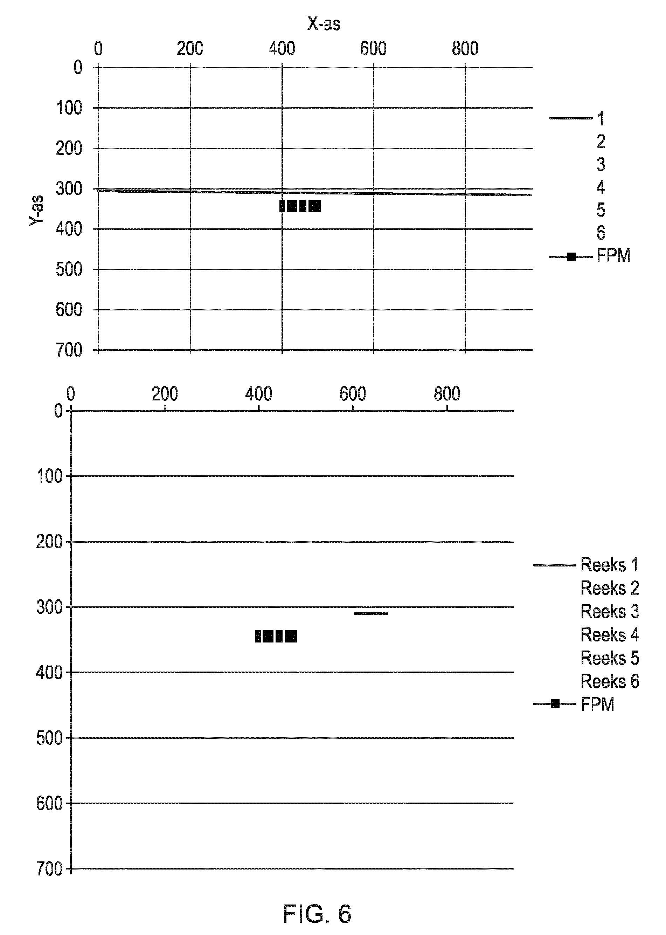

Figures 5 and 6 show the pixel flow field for 6 tracked pixels as before. In some situations, such as when the aircraft is pitching or yawing, the FOE is located outside of the field of view of the camera and a correction is needed to identify the FPM. In circumstances where the FOE is different to the FPM, it is possible to identify a centre of motion (COM). In the case of yaw or pitch, if the turn is continued at the same turn angle, it is possible to predict where the aircraft will head at some future time, whereas the FPM is the point the aircraft is flying towards at a particular instant and if the turn was instantly removed. When the aircraft is only rolling, the COM is the point towards which the aircraft is flying, as shown in Figure 3.

When the aircraft is yawing, (or pitching or rolling) reference pixels may be used to adjust the apparent FOE using the flow of reference pixels between successive images over a time period (tᵢ). Reference pixels are identified in an image and may correspond to the horizon line, or a feature such as a distant building or the summit of a peak. In certain situations, other slow moving or stationary identifiable reference pixels may be used to adjust the FOE.

A predetermined set of criteria is applied in order to identify a reference pixel in the image and the identified reference pixel is then tracked between successive images.

An adjustment factor is computed by the processor to adjust the FOE for the effects of pitch, roll and/or yaw motion of the aircraft. The adjustment factor is applied to the FOE to correct the FPM_{O}.

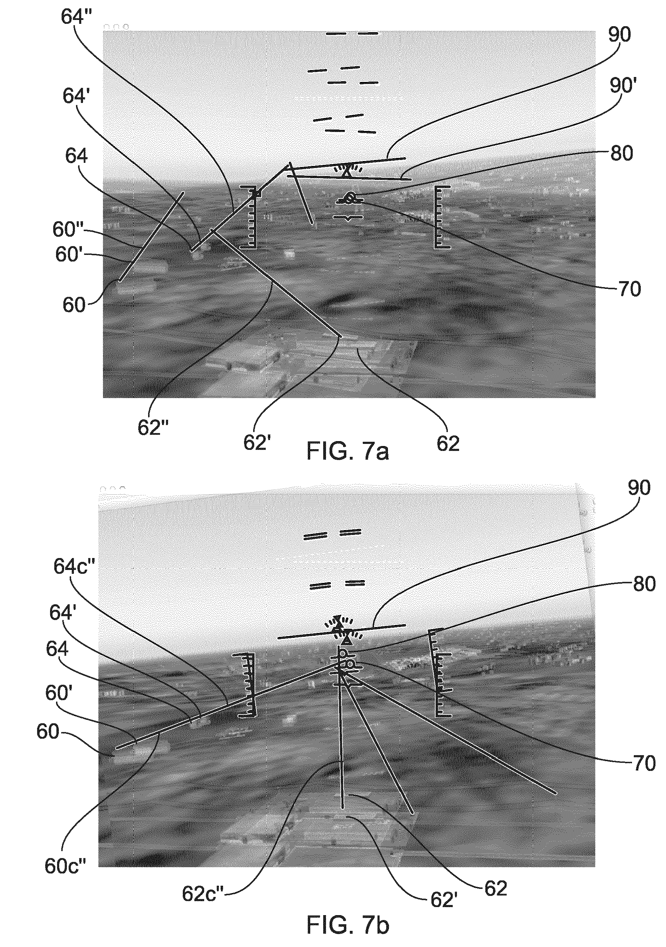

Figures 7a and 7b show the successive images captured during roll of the aircraft. Successive images have been superimposed without any adjustment in Figure 7a. In order to demonstrate the effect of stabilising certain motions of the aircraft in order to adjust the FOE, certain points have been identified in the images. The reference points correspond to the medium sized building 60, the large shopping complex 62 and the small building 64 are shown in the Figure. The buildings are offset (between 60 and 60') not only by the forward translational movement of the aircraft but also due to the roll of the aircraft in the time between image capture. Figure 7a shows an unadjusted set of superimposed images. The flow of pixels corresponding to the reference points without applying any adjustment factor is shown in the form of extrapolated flow lines (see for example, for each building 60, 62 and 64, the flow lines 60", 62" and 64") between the reference points between successive images. The extrapolated flow lines do not correspond to the FOE.

In the case of a roll motion of the aircraft, the FOE is adjusted by first identifying the horizon and overlaying the identified horizon of successive images. This stabilises the effect of the roll of the aircraft and enables the calculation of the adjusted FOE and therefore the determination of the FPMₒ. It is clear from Figure 7b that by stabilising the images using the reference of the horizon (at least one corresponding reference pixel), from the flow of pixels between successive images it is possible to identify a FOE and therefore identify a FPM_{O}. Simply overlaying the horizon of successive images provides clear determination of the FOE and the FPM_{O}.

In the case of adjusting the FOE for pitch motion of the aircraft, again, the horizon is identified and successive images are overlaid using the point of reference (i.e. the horizon) to effectively stabilise the effect of the pitch of the aircraft and enables the calculation of the adjusted FOE and therefore the determination of the FPMₒ.

Even in situations where the horizon is not available, it is still possible to use reference pixels and overlay the reference pixels from successive images to stabilise the effect of the roll or pitch of the aircraft and enables the calculation of the adjusted FOE and therefore the determination of the FPMₒ.

The situation is subtly different for yaw motion of the aircraft. In the situation of yawing motion, the horizon does not provide a means of stabilising the images. Instead, reference points of buildings may be used to stabilise the images. The reference pixels identified include reference points such as buildings or summits of mountains or other identifiable pixels. Using reference pixels, successive images may be stabilised for yaw motion.

When the aircraft is yawing, (or pitching or rolling) the flow of pixels may also be used to determine the amount of displacement of the aircraft over and around a particular axis. From this information, it is possible to predict where the aircraft is turning towards, and the current FPM, of course. This information is not provided by the FPM_{I}, since it only gives instantaneous information on the direction of aircraft heading. It is possible to choose not to take this COM information into account, or to use it as a kind of predictor (rate of pitch, and rate of turn rate of roll etc). It is to be noted, that as a practical matter, at least during flight, there will always be an FOE because the aircraft will always translate in some direction and not only rotate about an axis, as suggested in Figure 6, for example.

Finally, goniometric calculations may be used to identify the distance Δx the aircraft has travelled by mapping pixels in the field of view of the camera and by using the distance h from the earth's surface to the aircraft and the angle of view of the camera as shown in Figure 7(a). Similarly, it is possible to identify the rotation of the aircraft (illustrated in Figure 7(b)) by knowing the angle of view of a camera and the distance between the aircraft and a point recorded by the camera.

The processor calculates a dimension of rotation of the aircraft by knowing the angle of view of the camera. A raster of successive images from the camera is developed and knowing the distance from the aircraft to the ground, or to an object such as a distant mountain (for example, using radar), it is feasible to calculate an effective ground distance the aircraft has travelled between two successive images.

For example, at least two ground coordinates from successive images from the camera may be identified, the ground coordinates providing a time sequenced indication of ground position of the aircraft. A calculation can then be made of the angle between the two ground coordinates, the angle representing an angle of rotation of the aircraft and the centre of motion (COM) of the aircraft. Using the COM of the aircraft it is possible to normalise the flight path marker FPM_{O} calculated on the basis of flow of pixels in successive images captured by the camera.

The processor overlays the calculated flight path marker on the image displayed by the display. The displayed flight path marker may be one of either the first and second flight path markers (i.e. either FPM_{I} or FPM_{O}), or a combination thereof.

An alarm is provided if the correlation between the first and second flight path markers is less than a predetermined threshold. The alarm may be a sound, a flashing light, or a change in the displayed flight path marker and the alarm indicates a lack of correspondence between FPM_{I} and FPM_{O}.

The alarm provides the pilot with a warning that either the FPM_{I} or FPM_{O} are not functioning effectively, or therefore neither the FPM_{I} nor FPM_{O} should be relied upon for navigation.

Although embodiments of the head-up display system are described in relation to an aircraft it is envisaged that the head-up display system is equally adaptable for use in other modes of transport such as automobiles, ships, boats, and military tanks.

Similarly, it is envisaged that the head-up display system is adaptable for incorporation into a wearable device such as a helmet.

It will be clear to a person skilled in the art that features described in relation to any of the embodiments described above can be applicable interchangeably between the different embodiments. The embodiments described above are examples to illustrate various features of the invention

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A portable head up display system for an aircraft comprising:
a display, for disposition in a cockpit of the aircraft in a forward line of sight of a pilot when seated in a pilot's seat in the cockpit;
a camera, for disposition on the aircraft to provide a field of view that at least partially intersects the line of sight of the pilot when seated in the pilot's seat in the cockpit; and
a processor; wherein:
the display is configurable to display an image captured by the camera of the external environment of the aircraft that the pilot would observe in the direction of the display in the absence of the display and any aircraft objects;
the processor is adapted to receive avionic information from instrumentation, either of the aircraft or of the system;
the processor is adapted to calculate, on the basis of the instrumentation, a first flight path marker (FPM_{I});
the processor is adapted to calculate, on the basis of flow of pixels in successive images captured by the camera, a second flight path marker (FPM_{O}), to correlate with the FPM_{I}; and
the processor is adapted to overlay, on the image displayed by the display, one of said first and second flight path markers, or a combination thereof and provide an alarm if said correlation indicates a lack of correspondence between FPM_{I} and FPM_{O} greater than a predetermined threshold.

2. A portable head up display system according to claim 1, wherein a focus of expansion (FOE) of the flow of pixels over a time period (tᵢ) is determined by the processor, the FPM_{O} being determined on the basis of the position of the FOE.

3. A portable head up display system according to claim 2, wherein the FPM_{O} is determined from an adjustment of the position of the FOE based on pitch, roll and/or yaw motion of the aircraft, said motion of the aircraft being determined by computation of at least one reference point of said flow of pixels over said time period.

4. A portable head up display system according to any of claims 2 or 3, wherein the processor is adapted to compute a centre of motion (COM) of said flow of pixels over said time period.

5. A portable head up display system according to claim 4, wherein the COM is determined based on goniometric determinations from pixel flow over said period.

6. A portable head up display system according to any preceding claim, wherein the processor is adapted to overlay, on the image displayed by the display, at least one of: a bank angle indicator; a slip angle indicator, the slip angle being derived by the processor using the instrumentation; a maximum angle of attack (MAOA) indicator an airspeed indicator; an altitude indicator; a horizon line indicator; a heading indicator; or an acceleration indicator.

7. A portable head up display system according to any preceding claim, wherein the instrumentation includes an inertial measurement unit (IMU).

8. A portable head up display system according to any preceding claim, wherein the instrumentation includes a global positioning system (GPS), a microelectromechanical system gyroscope (MEMS gyro) and/or an accelerometer.

9. A portable head up display system according to any preceding claim, wherein the instrumentation is provided in a tamper-proof housing, and optionally, the tamper-proof housing is provided with an integral power supply.

10. A method for using a portable head-up display in an aircraft comprising:
displaying real-time images captured by a camera of the external environment of the aircraft that the pilot would observe in the direction of the display in the absence of the display and any aircraft objects on a display disposed in a cockpit of the aircraft in a forward line of sight of a pilot when seated in a pilot's seat in the cockpit, the camera being disposed on the aircraft to provide a field of view that at least partially intersects the line of sight of the pilot when seated in the pilot's seat in a cockpit;
receiving avionic information from instrumentation, either of the aircraft or of the system;
calculating, on the basis of the instrumentation, a first flight path marker (FPM_{I});
calculating, on the basis of flow of pixels in successive images captured by the camera a field of expansion (FOE) and determining from the FOE a second flight path marker (FPM_{O}), to correlate with the FPM_{I}; and
overlaying, on the image displayed by the display, one of said first and second flight path markers, or a combination thereof; and
providing an alarm if said correlation indicates a lack of correspondence between FPM_{I} and FPM_{O} greater than a predetermined threshold.

11. A method according to claim 10, the method further comprising:
selecting using predetermined criteria at least one reference pixel in the image; and
monitoring the flow of said at least one reference pixel between successive images over a time period (tᵢ);
computing an adjustment factor to adjust the FOE for the effects of pitch, roll and/or yaw motion of the aircraft; and
applying the adjustment factor to correct the FPM_{O}.

12. A method according to claims 10 or 11, the method further comprising identifying on the basis of flow of pixels in successive images captured by the camera the centre of motion (COM) of the aircraft using goniometric determinations.

13. A method according to any preceding claim, further comprising:
calculating a dimension of rotation of the aircraft by knowing the angle of view of the camera;
overlaying a raster on successive images from the camera; and
using a known distance from the aircraft to the ground, calculating an effective ground distance the aircraft has travelled between two successive images.

14. A method according to claims 12 or 13, further comprising:
identifying at least two ground coordinates from successive images from the camera, the ground coordinates representing a time sequenced ground position of the aircraft;
calculating the angle between the at least two ground coordinates, the angle representing an angle of rotation of the aircraft and the centre of motion (COM) of the aircraft; and
using the COM of the aircraft to normalise the flight path marker FPM_{O} calculated on the basis of flow of pixels in successive images captured by the camera.
